# EUROPEAN PATENT APPLICATION

(11) **EP 4 322 119 A1**
(43) Date of publication of application: **14.02.2024**
(21) Application number: 22190213.3
(22) Date of filing: 12.08.2022
(51) Int. Cl.: G06V 20/56, G06V 20/64

(54) **DATA PROCESSING**

(71) Applicant: Sandvik Mining and Construction Oy, 33330 Tampere (FI)
(72) Inventor: SANERMA, Simo, 33311 Tampere (FI); PUURA, Jussi, 33311 Tampere (FI); LIIKANEN, Henri, 33311 Tampere (FI)
(74) Representative: Sandvik

(57) **Abstract**

An apparatus, method and computer program product for:
receiving a first set of measurement data relating to an environment of the mobile mining vehicle at a first time instance, receiving a second set of measurement data relating to the environment of the mobile mining vehicle at a second time instance,
determining a transition of the mobile mining vehicle between the first time instance and the second time instance,
forming a combined set of measurement data by transforming the first set of measurement data to a coordinate frame of the second set of measurement data based on the transition of the mobile mining vehicle, and providing the combined set of measurement data to an obstacle detection system of the mobile mining vehicle.

## Description

### TECHNICAL FIELD

The present application relates generally to data processing. More specifically, the present application relates to processing data for an obstacle detection system.

### BACKGROUND

Obstacle detection in, for example, an underground environment such as a mining worksite is challenging as the circumstances vary constantly. For example, drilling, explosions, loading, hauling and other operations change the environment at a mining worksite. Therefore, a mobile mining vehicle may be provided with an obstacle detection system.

The obstacle detection system of a mobile mining vehicle may be configured to utilize different kinds of technologies to monitor an environment of the mobile mining vehicle.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided an apparatus comprising means for receiving a first set of measurement data relating to an environment of the mobile mining vehicle at a first time instance, receiving a second set of measurement data relating to the environment of the mobile mining vehicle at a second time instance, determining a transition of the mobile mining vehicle between the first time instance and the second time instance, forming a combined set of measurement data by transforming the first set of measurement data to a coordinate frame of the second set of measurement data based on the transition of the mobile mining vehicle, and providing the combined set of measurement data to an obstacle detection system of the mobile mining vehicle.

According to a second aspect of the invention, there is provided a method comprising: receiving a first set of measurement data relating to an environment of the mobile mining vehicle at a first time instance, receiving a second set of measurement data relating to the environment of the mobile mining vehicle at a second time instance, determining a transition of the mobile mining vehicle between the first time instance and the second time instance, forming a combined set of measurement data by transforming the first set of measurement data to a coordinate frame of the second set of measurement data based on the transition of the mobile mining vehicle, and providing the combined set of measurement data to an obstacle detection system of the mobile mining vehicle.

According to a third aspect of the invention, there is provided a computer program comprising instructions for causing an apparatus to perform at least the following: receiving a first set of measurement data relating to an environment of the mobile mining vehicle at a first time instance, receiving a second set of measurement data relating to the environment of the mobile mining vehicle at a second time instance, determining a transition of the mobile mining vehicle between the first time instance and the second time instance, forming a combined set of measurement data by transforming the first set of measurement data to a coordinate frame of the second set of measurement data based on the transition of the mobile mining vehicle, and providing the combined set of measurement data to an obstacle detection system of the mobile mining vehicle.

According to a fourth aspect of the invention, there is provided an apparatus comprising at least one processor and at least one memory including computer program code, the at least one memory and the computer program code configured to with the at least one processor, cause the apparatus at least to: receive a first set of measurement data relating to an environment of the mobile mining vehicle at a first time instance, receive a second set of measurement data relating to the environment of the mobile mining vehicle at a second time instance, determine a transition of the mobile mining vehicle between the first time instance and the second time instance, form a combined set of measurement data by transforming the first set of measurement data to a coordinate frame of the second set of measurement data based on the transition of the mobile mining vehicle, and provide the combined set of measurement data to an obstacle detection system of the mobile mining vehicle.

According to a fifth aspect of the invention, there is provided a non-transitory computer readable medium comprising program instructions for causing an apparatus to perform at least the following: receiving a first set of measurement data relating to an environment of the mobile mining vehicle at a first time instance, receiving a second set of measurement data relating to the environment of the mobile mining vehicle at a second time instance, determining a transition of the mobile mining vehicle between the first time instance and the second time instance, forming a combined set of measurement data by transforming the first set of measurement data to a coordinate frame of the second set of measurement data based on the transition of the mobile mining vehicle, and providing the combined set of measurement data to an obstacle detection system of the mobile mining vehicle.

According to a sixth aspect of the invention, there is provided a computer readable medium comprising program instructions for causing an apparatus to perform at least the following: receiving a first set of measurement data relating to an environment of the mobile mining vehicle at a first time instance, receiving a second set of measurement data relating to the environment of the mobile mining vehicle at a second time instance, determining a transition of the mobile mining vehicle between the first time instance and the second time instance, forming a combined set of measurement data by transforming the first set of measurement data to a coordinate frame of the second set of measurement data based on the transition of the mobile mining vehicle, and providing the combined set of measurement data to an obstacle detection system of the mobile mining vehicle.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 shows an example loader;
Figure 4 illustrates an example method incorporating aspects of example embodiments;
Figures 5A and 5B show examples of content in data frames; and
Figures 6A and 6B show examples of forming a combined set of measurement data.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to enabling an increase in accuracy of an obstacle detection system.

As mentioned above, obstacle detection in, for example, an underground environment such as a mining worksite is challenging as the circumstances vary constantly. An obstacle detection system may be configured to perform collision examination based on measurement data such as data received from at least one scanner associated with the mobile mining machine. The at least one scanner may be configured to scan the environment of the vehicle. However, the measurement data may be too sparse, especially at long distance, for detecting possible obstacles, potholes of voids on the ground.

An example embodiment relates to an apparatus configured to receive a first set of measurement data relating to an environment of the mobile mining vehicle at a first time instance, receive a second set of measurement data relating to the environment of the mobile mining vehicle at a second time instance, determine a transition of the mobile mining vehicle between the first time instance and the second time instance, form a combined set of measurement data by transforming the first set of measurement data to a coordinate frame of the second set of measurement data based on the transition of the mobile mining vehicle, and provide the combined set of measurement data to an obstacle detection system of the mobile mining vehicle.

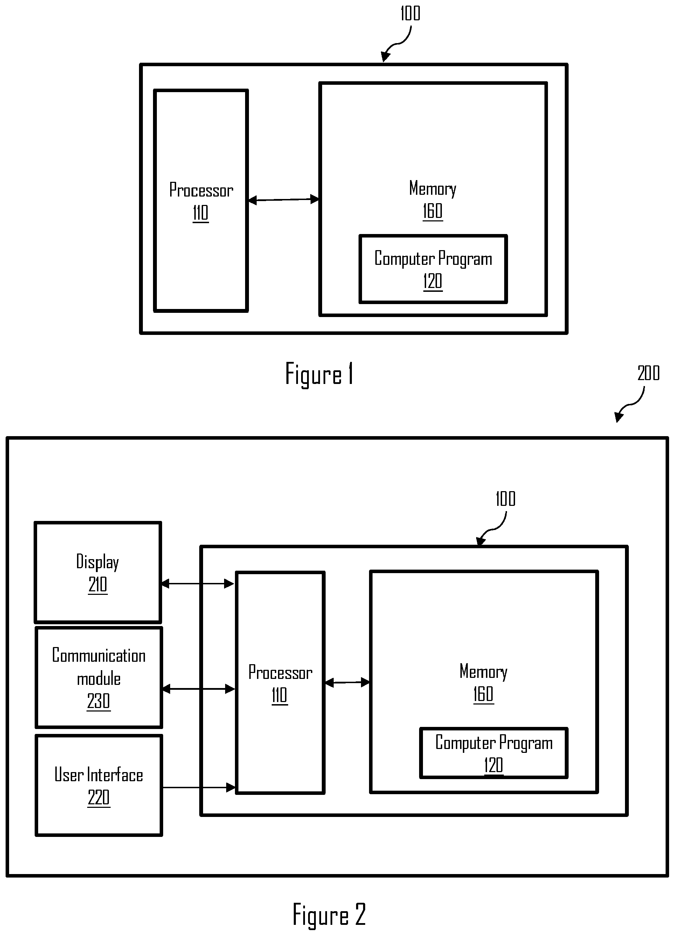

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a computing device or the like. In the examples below it is assumed that the apparatus 200 is a data processing apparatus.

In the example embodiment of Figure 2, the apparatus 200 is illustrated as comprising the apparatus 100, a display 210, a user interface 220 for interacting with the computing device 200 and a communication module 230.

The display 210 may also be configured to act as a user interface. For example, the display may be a touch screen display. Additionally or alternatively, the user interface may also comprise a manually operable control such as a button, a key, a touch pad, a joystick, a stylus, a pen, a roller, a rocker, a keypad, a keyboard or any suitable input mechanism for inputting and/or accessing information. In an example embodiment, the display 210 and/or the user interface 220 may be external to the apparatus 200, but in communication with it.

The apparatus 200 may be configured to communicate, using the communication module 230, with one or more other devices such as different sensors and/or control units. Communication may comprise receiving and/or transmitting data via a wireless or wired connection. The communication module 230 may further be configured to establish radio communication with another device using, for example, a cellular network, a Bluetooth, WiFi connection, ultra-wide band (UWB) connection, chirp-spread-spectrum (CSS) connection, and/or the like.

According to an example embodiment, the apparatus 200 is operatively connected to a mobile mining vehicle. For example, the apparatus 200 may comprise a control unit that is part of a control or automation system of the mobile mining device.

The mobile mining vehicle may comprise an automated mining vehicle that is configured to perform at least some tasks autonomously. An automated mining vehicle operating in an automatic mode may be configured to, for example, receive a task to be performed, perceive the environment of the mobile mining vehicle and autonomously perform the task while taking the environment into account. An automated mining vehicle operating in an automatic mode may be configured to operate independently but may be taken under external control at certain operation areas or conditions, such as during states of emergencies.

The mobile mining vehicle may comprise a work machine such as a lorry, dozer, dumper, van, mobile rock drilling or milling rig, mobile reinforcement machine, a bucket loader, or some other kind of mobile mining vehicle.

According to an example embodiment, the apparatus 200 is configured to receive information on the mobile mining vehicle. Information on the mobile mining vehicle may comprise information from different sources such as measurement data, data provided by an algorithm, simulated data, or the like. Measurement data may comprise raw data or processed data.

Information on the mobile mining vehicle may comprise different types of information such as operational and/or contextual information relating to the mobile mining vehicle. Operational information may comprise, for example, information on operation of the mobile mining vehicle or information on parameters relating to operation of the mobile mining vehicle. Contextual information may comprise, for example, information on the environment of the mobile mining vehicle.

According to an example embodiment, the apparatus 200 is configured to receive measurement data from at least one sensor configured to scan the environment of the mobile mining vehicle. According to an example embodiment, the at least one sensor is associated with the mobile mining vehicle.

The at least one sensor configured to scan the environment of the mobile mining vehicle may comprise, for example, a light detection and ranging (lidar) sensor. A lidar sensor is configured to determine a range by targeting an object with a laser and measuring the time for the reflected light to return to the receiver.

As another example, the at least one sensor configured to scan the environment of the mobile mining vehicle may comprise a radio detection and ranging (radar) sensor. A radar sensor is configured to transmit electromagnetic energy toward objects and observing the echoes returned from them.

As a further example, the at least one sensor configured to scan the environment of the mobile mining vehicle may comprise a time-of-flight (ToF) camera configured to determine a distance between the camera and a subject by measuring a round trip time of an artificial light signal provided by a laser or an light-emitting diode (LED).

Measurement data received from the at least one sensor may comprise, for example, point cloud data. Point cloud data may comprise a plurality of data points representing, for example, distances between the mobile mining vehicle and objects in the environment of the mobile mining vehicle at a particular time instance. An individual point included in a point cloud may be presented by, for example, X and Y coordinates, or X, Y and Z coordinates with respect to a particular coordinate frame.

A coordinate frame may be defined by an origin and a plurality of coordinate axes. A coordinate frame may comprise, for example, an orthogonal coordinate frame or a spherical coordinate frame. A two-dimensional (2D) coordinate frame is defined by an origin and two coordinate axes such as an X axis and Y axis, and a three-dimensional (3D) coordinate frame is defined by an origin and three coordinate axes such as an X, Y and Z axis.

According to an example embodiment, the apparatus 200 is configured to receive a first set of measurement data relating to an environment of the mobile mining vehicle at a first time instance.

The first set of measurement data may be associated with a first coordinate frame such as a coordinate frame of a sensor providing the first set of measurement data. The origin of the first coordinate frame may comprise, for example, a position of the sensor providing the first set of measurement data, a reference point associated with the mobile mining vehicle, or an origin of the work site coordinate system where the mobile mining vehicle operates.

According to an example embodiment, the first set of measurement data comprises first point cloud data. The first point cloud data may comprise a representation of the environment of the mobile mining vehicle at the first time instance. The representation may comprise, for example, a 3D representation of the environment of the mobile mining vehicle.

According to an example embodiment, the apparatus 200 is configured to receive a second set of measurement data relating to the environment of the mobile mining vehicle at a second time instance.

The second set of measurement data may be associated with a second coordinate frame such as a coordinate frame of a sensor providing the second set of measurement data. The origin of the second coordinate frame may comprise, for example, a position of the sensor providing the second set of measurement data, a reference point associated with the mobile mining vehicle, or an origin of the work site coordinate system where the mobile mining vehicle operates.

According to an example embodiment, the second set of measurement data comprises second point cloud data. The second point cloud data may comprise a representation of the environment of the mobile mining vehicle at the second time instance. The representation may comprise, for example, a 3D representation of the environment of the mobile mining vehicle.

The apparatus 200 may be configured to receive the first set of measurement data and the second set of measurement data from the same sensor or from different sensors associated with the mobile mining vehicle.

According to an example embodiment, the first set of measurement data and the second set of measurement data comprise at least partially overlapping data. Overlapping data may comprise, for example, a representation of a same object in the environment of the mobile mining vehicle.

Without limiting the scope of the claims, an advantage of at least partially overlapping data of the first set of measurement data and the second set of measurement data is that more accurate information on the environment of the mobile mining vehicle may be received.

According to an example embodiment, the first set of measurement data and the second set of measurement data comprise lidar data. According to another example embodiment, the first set of measurement data and the second set of measurement data comprise radar data. According to a further example embodiment, the first set of measurement data and the second set of measurement data comprise ToF camera data.

A set of measurement data may comprise one or more data frames provided by a sensor configured to scan the environment of the mobile mining vehicle. For example, a set of measurement data may comprise one or more lidar data frames, radar data frames or ToF camera data frames. At least one data frame may comprise a single data frame or a plurality of data frames.

A plurality of data frames may comprise a plurality of individual data frames or a data frame comprising a plurality of combined data frames. A plurality of data frames may comprise, for example, 10 individual data frames or a plurality of data frames may comprise a data frame in which, for example, 10 individual data frames are combined.

According to an example embodiment, a data frame comprises a plurality of data points representing the environment of the mobile mining vehicle at a particular time instance. A data frame may comprise, for example, a 2D or 3D map comprising data points representative of distances from the mobile mining vehicle to surrounding objects such as tunnel walls, obstacles, other vehicles, or pedestrians at a particular time instance. A distance from the mobile mining vehicle to an object may comprise a distance from a specific point associated with the mobile mining vehicle such as a position of a sensor mounted on the mobile mining vehicle to an object.

According to an example embodiment, the first set of measurement data comprises a plurality of data frames and the second set of measurement data comprises a single second data frame. For example, assuming the first time instance precedes the second time instance, and the second time instance is a current moment, the first set of measurement data comprises a plurality of frames comprising historical data and the second set of measurement data comprises a single frame of current data.

According to another example embodiment, the first set of measurement data comprises a single data frame and the second set of measurement data comprises a plurality of data frames. For example, assuming the first time instance precedes the second time instance, and the second time instance is a current moment, the first set of measurement data comprises a single frame of historical data and the second set of measurement data comprises a plurality of frames comprising current data.

According to an example embodiment, the apparatus 200 is configured to determine a transition of the mobile mining vehicle based on the information on the mobile mining vehicle.

A transition of the mobile mining machine may comprise, for example, a translation such as a change of location or a displacement of the mobile mining machine, a rotation such as a change of orientation of the mobile mining machine or a combination of a translation and rotation.

According to an example embodiment, the apparatus 200 is configured to determine a transition of the mobile mining vehicle between the first time instance and the second time instance.

A transition of the mobile mining vehicle may comprise an absolute transition or a relative transition.

According to an example embodiment, a transition of the mobile mining vehicle comprises a translation of the mobile mining vehicle and/or rotation of the mobile mining vehicle. A translation of the mobile mining vehicle may comprise, for example, a distance travelled and rotation of the mobile mining vehicle may comprise a change of orientation between the first time instance and the second time instance.

According to an example embodiment, the transition of the mobile mining vehicle comprises a transition of the mobile mining vehicle in relation to a reference coordinate system.

The reference coordinate system may comprise, for example, a global coordinate system, a coordinate system of a worksite where the mobile mining vehicle is operating, or some other coordinate system associated with a predetermined reference point.

The apparatus 200 may be configured to determine the transition of the mobile mining vehicle based on data received from, for example, a system monitoring the mobile mining vehicle. The system monitoring the mobile mining vehicle may comprise, for example, a plurality of sensors associated with the mobile mining vehicle or a system configured to monitor the environment of the mobile mining vehicle.

According to an example embodiment, the apparatus 200 is configured to determine the transition of the mobile mining vehicle based on the first set of measurement data and the second set of measurement data.

Determining the transition of the mobile mining vehicle based on the first set of measurement data and the second set of measurement data may comprise, for example, comparing at least some of the data points included in the first set of measurement data and the second set of measurement data. For example, the apparatus 200 may be configured to compare first point cloud data and second point cloud data.

Comparing the first point cloud data and the second point cloud data may comprise, for example, analyzing the first point cloud data and the second point cloud data in order to find similarities between the point clouds and determining a transition between the first point cloud data and the second point cloud data.

Without limiting the scope of the claims, an advantage of determining the transition of the mobile mining vehicle based on the first set of measurement data and the second set of measurement data is that usage of additional sensors for determining the transition may be avoided.

According to an example embodiment, the apparatus 200 is configured to determine the transition of the mobile mining vehicle based on data from one or more sensors associated with the mobile mining vehicle.

Determining the transition of the mobile mining vehicle based on data from one or more sensors associated with the mobile mining vehicle may comprise, for example, determining a position of the mobile mining vehicle at the first time instance and the second time instance, and determining the transition based on a change of position of the mobile mining vehicle. The apparatus 200 may be configured to determine the position of the mobile mining vehicle based on odometer data, dead-reckoning, and/or the like.

According to an example embodiment, the apparatus 200 is configured to form a combined set of measurement data by transforming the first set of measurement data to a coordinate frame of the second set of measurement data based on the transition of the mobile mining vehicle.

As explained above, the first set of measurement data and the second set of measurement data comprise data points associated with a first coordinate frame and a second coordinate frame, respectively. The first coordinate frame and the second coordinate frame may be different coordinate frames or the first coordinate frame and the second coordinate frame may be the same coordinate frame.

According to an example embodiment, transforming the first set of measurement data to a coordinate frame of the second set of measurement data comprises mapping the coordinates of the data points included in the first set of measurement data relative to the origin of the coordinate frame of the second set of measurement data.

Mapping the coordinates of the data points included in the first set of measurement data relative to the origin of the coordinate frame of the second set of measurement data may comprise comparing data points included in the first set of measurement data and data points included in the second set of measurement data and finding matches between the data points.

Transforming the first set of measurement data to a coordinate frame of the second set of measurement data may comprise, for example, aligning the first coordinate frame with the second coordinate frame, thereby transforming a data point in the first coordinate frame to a data point in the second coordinate frame. The apparatus 200 may be configured to align the first coordinate frame to the second coordinate using at least one transformation matrix or a transformation function.

According to an example embodiment, the apparatus 200 is configured to determine at least one transformation matrix or a transformation function for transforming the first set of measurement data to a coordinate frame of the second set of measurement data based on the transition of the mobile mining vehicle.

According to an example embodiment, the apparatus 200 is configured to determine a transformation matrix or transformation function for a data frame included in a set of measurement data. For example, assuming the set of measurement data comprises a plurality of individual data frames, the apparatus 200 may be configured to determine a transformation matrix or a transformation function for each of the plurality of individual data frames.

Determining a transformation matrix may comprise, for example, selecting a predefined transformation matrix from a look-up table based on the transition of the mobile mining vehicle or forming a transformation matrix based on the transition of the mobile mining vehicle. Similarly, determining a transformation function may comprise, for example, selecting a predefined transformation function from a look-up table based on the transition of the mobile mining vehicle or forming a transformation function based on the transition of the mobile mining vehicle.

A transition of the mobile mining vehicle may comprise translation and/or rotation that may be used for determining at least one transformation matrix or transformation function for translating and/or rotating the first coordinate frame.

According to an example embodiment, forming the combined set of measurement data comprises appending history data to new data.

Without limiting the scope of the claims, an advantage of forming a combined set of measurement data is that more data points describing the environment of the mobile mining vehicle may be obtained. In other words, the density of data points describing the environment of the mobile mining vehicle may be increased thereby enabling more accurate information on the environment.

The apparatus 200 may be configured to store the combined set of measurement data in a data buffer. The data buffer may comprise a first-in first out (FIFO) buffer such as a ring buffer.

The apparatus 200 may be configured to form the combined set of measurement data based on one or more parameters. The parameters may be adjustable, for example, by a user, or based on the operation of the mobile mining vehicle or information on the environment of the mobile mining vehicle.

According to an example embodiment, the apparatus 200 is configured to form the combined set of measurement data based on a data buffer parameter. A data buffer parameter may comprise, for example, a parameter defining the size of the data buffer, amount of data to be included in the combined set of measurement data, a type of data to be included in the combined set of measurement data and/or a number of sets of measurement data to be included in the combined set of measurement data.

According to an example embodiment, the apparatus 200 is configured to form the combined set of measurement data based on a data buffer parameter corresponding to a number of data frames to be included in the combined set of measurement data.

A data buffer parameter may comprise a single parameter or a set of parameters.

For example, a data buffer value two may define that two data frames are to be included in the combined data set. In other words, a single first data frame and a single second frame are to be included in the combined data set. As another example, a data buffer value ten may define that ten data frames are to be included in the combined data. In that case the ten data frames may comprise nine first data frames and a single second data frame, for example.

The data buffer parameter may further comprise at least one criterion for including a data frame into the combined set of measurement data and/or at least one criterion for excluding a data frame from the combined set of measurement data.

According to an example embodiment, the data buffer parameter defines at least one criterion to be fulfilled by a data frame to be included to the combined set of measurement data.

The at least one criterion may relate to, for example, operation of the mobile mining vehicle such as a transition of the mobile mining vehicle or contents of one or more data frames such as contents of two or more consecutive data frames.

According to an example embodiment, the at least one criterion comprises a transition of the mobile mining vehicle. The at least one criterion may comprise, for example, a criterion defining a status of the mobile mining vehicle such as whether the mobile mining vehicle is moving or stationary, or a criterion defining a threshold distance that needs to be fulfilled before a data frame is to be included in the combined set of measurement data.

For example, if the mobile mining machine is stationary or moving very little, measurement data relating to the environment of the mobile mining vehicle is assumed to remain substantially the same and therefore providing a minimal contribution to the combined set of measurement data.

According to an example embodiment, the at least one criterion defines that contents of two or more consecutive data frames need to be substantially different from each other. For example, the at least one criterion may define that if there is no difference between two consecutive frames, one of the frames is excluded from the combined set of measurement data.

Without limiting the scope of the claims, an advantage of the data buffer parameter comprising a criterion relating to a transition of the mobile mining vehicle or contents of consecutive data frames is that data frames failing to contribute new data to the combined set of measurements can be left out, thereby enabling more efficient processing of data.

According to an example embodiment, the apparatus 200 is configured to provide the combined first set of measurement data and the second set of measurement data to an obstacle detection system of the mobile mining vehicle.

The obstacle detection system may comprise, for example, a proximity detection, a collision warning or a collision avoidance system.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for receiving a first set of measurement data relating to an environment of the mobile mining vehicle at a first time instance, means for receiving a second set of measurement data relating to the environment of the mobile mining vehicle at a second time instance, means for determining a transition of the mobile mining vehicle between the first time instance and the second time instance, means for forming a combined set of measurement data by transforming the first set of measurement data to a coordinate frame of the second set of measurement data based on the transition of the mobile mining vehicle, and means for providing the combined set of measurement data to an obstacle detection system of the mobile mining vehicle.

The apparatus 200 may further comprise means for determining the transition of the mobile mining vehicle based on the first set of measurement data and the second set of measurement data, means for forming the combined set of measurement data based on a data buffer parameter corresponding to a number of data frames to be included in the combined set of measurement data and/or means for determining at least one transformation matrix for transforming the first set of measurement data to a coordinate frame of the second set of measurement data based on the transition of the mobile mining vehicle.

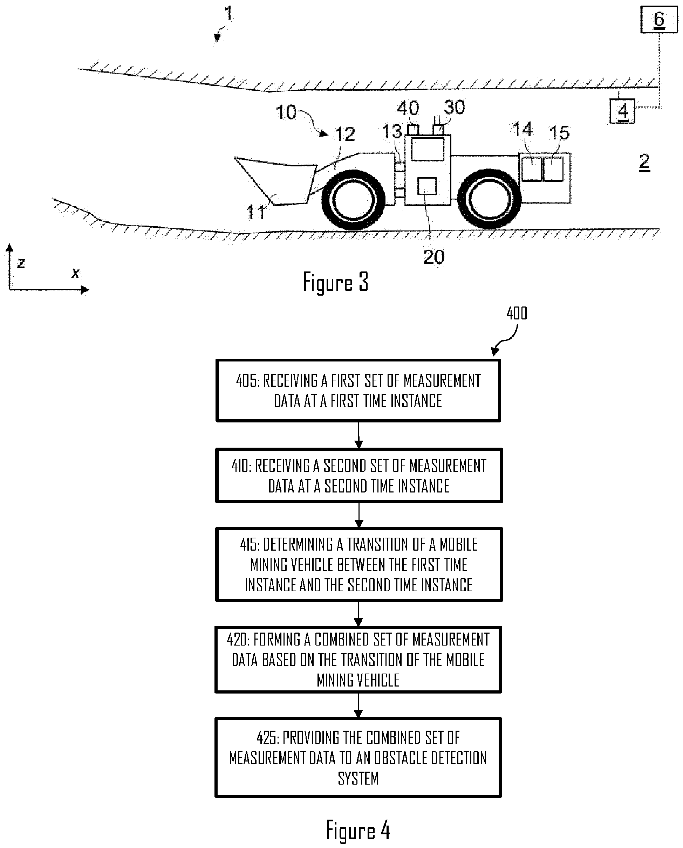

Figure 3 illustrates an example of a portion of a mining worksite 1 such as a portion of an underground tunnel 2 or an on-surface area where a mobile mining vehicle 10 is operating. The mining worksite may comprise an ore mine or a construction site such as a railway of road tunnel site.

A mobile mining vehicle may comprise a work machine such as a lorry, dozer, dumper, van, mobile rock drilling or milling rig, mobile reinforcement machine, a bucket loaders, or other kind of mobile mining vehicle.

In the example of Figure 3, the mobile mining vehicle comprises a loader or a load and haul (LHD) vehicle comprising a bucket 11 connected to a boom 12. The vehicle 10 may be, for example, an articulated vehicle comprising two sections connected by a joint 13.

In the example of Figure 3, the vehicle 10 comprises a system 14 of pumps for generating hydraulic pressure for operating various parts of the machine, such as lifting the boom 12, turning the bucket 11, or the like. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box. A drivetrain of the vehicle 10 may comprise, for example, motor 15, the crank shaft, and/or a transmission.

The vehicle 10 comprises at least one control unit 20 such as the apparatus 200 configured to control at least some functions and/or actuators of the vehicle. The control unit 20 may comprise one or more computing units/processors executing computer program code stored in memory. The control unit 20 may be connected to one or more other control units of a control system of the vehicle, for example, by a controller area network (CAN) bus. The control unit 20 may comprise or be connected to a user interface (UI) with a display device as well as an operator input interface. Such interfaces are usable for receiving operator commands and information to the control unit.

The vehicle 10 may comprise a wireless communication device 30 such as the communication module 230, by which the control unit 20 and/or another unit of control system of the vehicle 10 may be configured to establish a data connection. The data connection comprises at least one of: data reception, and/or data transmission. The data connection may be formed between the control system of the vehicle and at least one control device of a control system 6 external to the vehicle. The data connection may utilize a wireless connection provided by a base station or an access node 4. The communication device 30 may thus be operatively connected to a communications system of the worksite, such as a wireless access system comprising a wireless local area network (WLAN) and/or a cellular communications network such as a 4G, 5G or some other generation cellular network.

The control system 6 may comprise or be connected to one or more further networks and/or data processing systems, such as a worksite management system, a cloud service, a data analytics system, an intermediate communications network, such as the internet. The control system 6 may comprise or be connected to one or more further devices or control units, such as a handheld user unit, a vehicle unit, a worksite management device/system, a remote control and/or monitoring device, data analytics device, sensor system/device, or the like.

The vehicle 10 may be unmanned. An unmanned vehicle may comprise a user interface to allow a user to control any of the functions of the vehicle, for example, steering. The vehicle may comprise an operator input interface in addition to the user interface or as an alternative to the user interface. Said interfaces of the vehicle may be located in a remote location from the vehicle and the vehicle may be remotely controlled. Examples of remote control include, for example, control by an operator in the tunnel, control by an apparatus within a control room at the worksite, or even control by an apparatus from a long distance away from the worksite via one or more communications networks. The vehicle 10 may be an automated vehicle, which is configured to operate or drive in an autonomous operating or driving mode independently without requiring continuous user control. Such an automated vehicle may be taken under external control, for example, during states of emergencies. When the vehicle is in a manual driving mode, an operator drives the vehicle manually, by remote control or locally at the vehicle by operator controls. The operator may set the vehicle into an automatic driving mode in which the vehicle is configured to automatically drive a specified route, for example, between a loading point and a dump shaft.

Apparatuses of the worksite, such as the one or more control devices of the control system 6 and/or the mining vehicle 10, may be configured to store and use at least one worksite model representing a current state and/or target state of the worksite environment. The worksite model may be an environment model or a map. The worksite model may be a 2D model or a 3D model indicative of surface profiles and obstacles at the worksite, at an area operated by mining vehicles, for example. In the case of an underground worksite, the worksite model may be a tunnel model comprising information on tunnel profiles.

According to an example embodiment, the control system 6 and/or the mining vehicle 10 is configured to store a 3D model of the underground worksite, illustrating different parts of tunnels such as floors, walls, and ceilings of the tunnel network. The 3D model may comprise or be formed based on point cloud data generated based on scanning the environment of mining vehicle 10. In some other embodiments, the 3D model may be stored in some other format, such as a mesh model comprising vertices, edges and faces. In some embodiments, the 3D model may be a design model or may be generated based on a design model, such as a computer aided design (CAD) model, created by a mine designing software or a 3D model created on the basis of tunnel lines and profiles designed in a drill and blast design software.

The vehicle 10 may comprise one or more sensors, or scanners 40, configured to perform scanning of environment around the vehicle. The scanning results may be applied to detect the position and orientation of the vehicle and one or more further elements thereof, such as the position and orientation of the scanner 40, or the bucket 11.

The control unit 20 may be configured to compare scanned tunnel profile data to reference profile data stored in the worksite model. The control unit 20 may be configured to position the mining vehicle on the basis of finding a match in a surface profile indicated by the scanning data and surface profile indicated by the worksite model. The control unit 20 may be configured to correct positioning by dead-reckoning based on scanning-based positioning.

In the example of Figure 3, the scanner 40 may be a 2D scanner configured to monitor tunnel walls at desired height, for example. The mining vehicle 10 may be configured to apply a 2D worksite model, for monitoring position of the mining vehicle based on environment scanning by a 2D scanner comprised by the mining vehicle. Alternatively, the scanner 40 may be a 3D scanner, such as a light detection and ranging (LIDAR) device, configured to generate 3D scanning data or point cloud data.

Figure 4 illustrates an example method 400 incorporating aspects of the previously disclosed embodiments. More specifically, the example method 400 illustrates forming a combined set of measurement data. In the example of Figure 4, the method is a computer-implemented method performed by the apparatus 200.

The method starts with receiving 405 a first set of measurement data relating to an environment of the mobile mining vehicle at a first time instance and receiving 410 a second set of measurement data relating to an environment of the mobile mining vehicle at a second time instance.

In the example of Figure 4, the first set of measurement data comprises one or more data frames representing distances between the mobile mining vehicle to surrounding objects at the first time instance and the second set of measurement data comprises one or more data frames representing distances between the mobile mining vehicle to surrounding objects at the second time instance.

The first set of measurement data comprises first point cloud data and the second set of measurement data comprises second point cloud data.

The method continues with determining 415 a transition of the mobile mining vehicle between the first time instance and the second time instance.

In the example of Figure 4, the transition of the mobile mining vehicle comprises a translation of the mobile mining vehicle, rotation of the mobile mining vehicle or a combination thereof. The transition may comprise an absolute transition or a relative transition.

Determining the transition of the mobile mining vehicle may comprise determining the transition of the mobile mining vehicle based on data from one or more sensors associated with the mobile mining vehicle. For example, determining a transition of a mobile mining vehicle may comprise comparing first point cloud data and second point cloud data, and determining a transition between the first point cloud data and the second point cloud data with respect to a global coordinate frame.

Alternatively or additionally, determining the transition of the mobile mining vehicle may comprise, for example, determining a position of the mobile mining vehicle at the first time instance and the second time instance, and determining the transition based on a change of position of the mobile mining vehicle. The apparatus 200 may be configured to determine the position of the mobile mining vehicle based on odometer data, dead-reckoning, or the like.

The method continues with forming 420 a combined set of measurement data by transforming the first set of measurement data to a coordinate frame of the second set of measurement data based on the transition of the mobile mining vehicle.

In the example of Figure 4, transforming the first set of measurement data to a coordinate frame of the second set of measurement data comprises mapping the coordinates of the data points included in the first set of measurement data relative to the origin of the coordinate frame of the second set of measurement data.

Transforming the first set of measurement data to a coordinate frame of the second set of measurement data may comprise, for example, aligning the first coordinate frame with the second coordinate frame, thereby transforming a data point in the first coordinate frame to a data point in the second coordinate frame. The transformation may be performed using at least one transformation matrix or transformation function. For example, a transition of the mobile mining vehicle may comprise translation and/or rotation that may be used for determining at least one transformation matrix or transformation function for translating and/or rotating the first coordinate frame.

Forming the combined set of measurement data may comprise forming the combined set of measurement data based on a data buffer parameter. A data buffer parameter may, for example, correspond to a number of data frames to be included in the combined set of measurement data and/or the data buffer parameter may comprise at least one criterion for including a data frame into the combined set of measurement data. The data buffer may alternatively or additionally comprise at least one criterion for excluding a data frame from the combined set of measurement data. Forming the combined set of measurement data may comprise appending history data to new data.

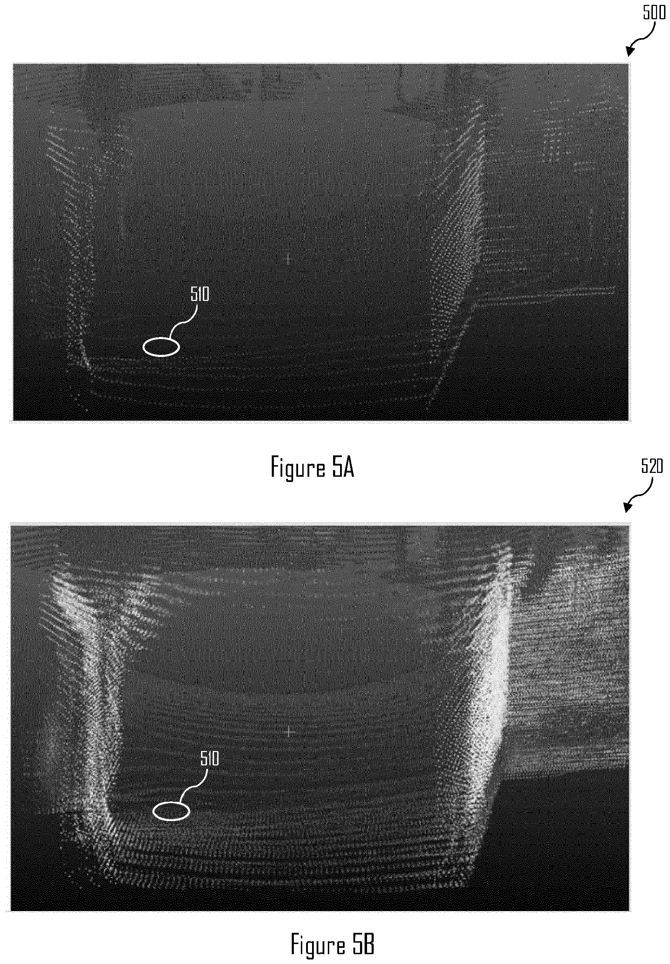

Figures 5A and 5B illustrate example sets 500, 520 of measurement data. The sets of measurement data may be received by the apparatus 200 at particular time instances.

Figure 5A illustrates a set of measurement data comprising a data frame representing distances from a mobile mining vehicle to surrounding objects at a particular time instance. The data frame of the example of Figure 5A is a lidar data frame, but it could also be a radar data frame or a ToF camera data frame, for example. In the example of Figure 5A, based on the contents of the data frame it is unclear whether there is a void in a position indicated by a circle 510.

Figure 5B illustrates a combined set of measurement data that may be formed, for example, by the apparatus 200. More specifically, Figure 5B illustrates contents of a plurality of data frames comprising measurement data representing distances from a mobile mining vehicle to surrounding objects at a particular time instance. In the example of Figure 5B, the combined set of measurement data comprises ten data frames.

Upon comparing Figures 5A and 5B, it can be seen that a denser set of measurement data in Figure 5B reveals that the possible void in Figure 5A actually is not a void.

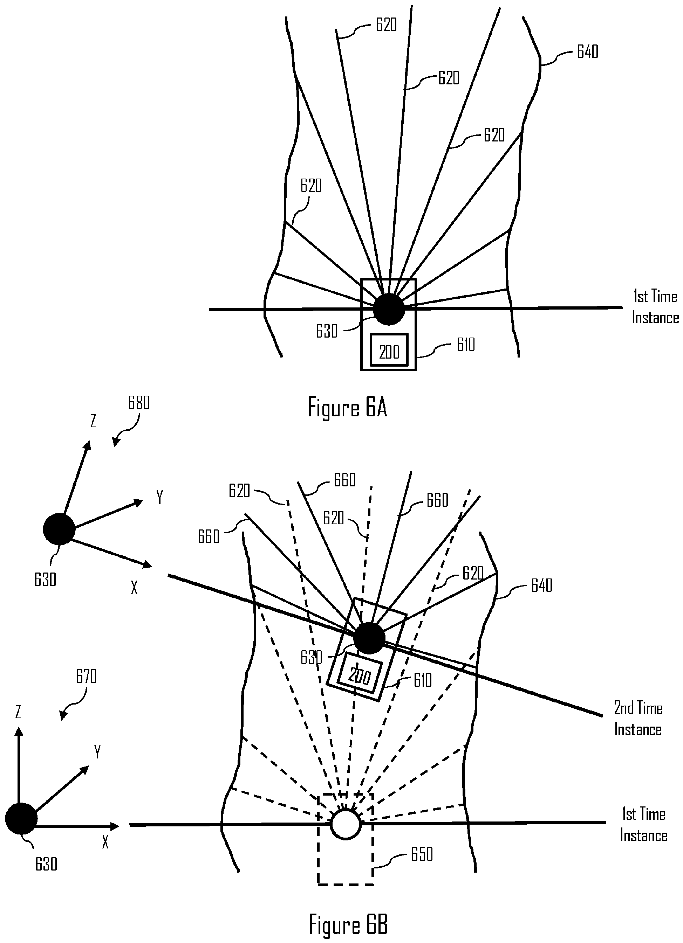

Figures 6A and 6B illustrate examples of forming a combined set of measurement data. Figure 6A illustrates a mobile mining vehicle at a first time instance and Figure 6B illustrates the mobile mining vehicle at a second time instance. The first time instance of the example of Figure 6A precedes the second time instance of the example of Figure 6B. The mobile mining vehicle comprises at least one sensor 630 configured to scan the environment of the mobile mining vehicle 610. In the examples of Figure 6A and Figure 6B the at least one sensor 630 comprises a lidar sensor and the combined set of measurement data is formed by the apparatus 200.

The example of Figure 6A illustrates a mobile mining vehicle 610 operating in an underground tunnel 640 at the first time instance. The apparatus 200 receives, from the sensor 630, a first set of measurement data 620 relating to the environment of the mobile mining at the first time instance. The first set of measurement data 620 is associated with a coordinate frame 670 of the sensor 630 such that the origin of the coordinate frame 670 is the position of the sensor 630.

In the example of Figure 6A, the first set of measurement data 620 comprises first point cloud data such as a data frame representing distances from the mobile mining vehicle 610 to surrounding objects at the first time instance similar to the example of Figure 5A.

The example of Figure 6B illustrates the mobile mining vehicle 610 operating in the underground tunnel 640 at the second time instance. The sensor 630 continues scanning the environment of the mobile mining vehicle 610 and the apparatus 200 receives from the sensor 630 a second set of measurement data 660 relating to the environment of the mobile mining vehicle 610 at the second time instance.

Similarly to the example of Figure 6A, the second set of measurement data is associated with the coordinate frame 680 of the sensor 630 such that the origin of the coordinate frame 680 is the position of the sensor 630.

In the example of Figure 6B, the second set of measurement data 660 comprises second point cloud data such as a data frame representing distances from the mobile mining vehicle 610 to surrounding objects at the second time instance similar to the example of Figure 5A.

The apparatus 200 determines a transition of the mobile mining vehicle 610 between the first time instance and the second time instance. The mobile mining vehicle at the first time instance is illustrated by the dashed line 650 in Figure 6B. As illustrated in the examples of Figures 6A and 6B, the transition comprises translation of the mobile mining 610 vehicle and rotation of the mobile mining vehicle 610 as the location and orientation of the mobile mining vehicle have changed from the position and orientation of the mobile mining vehicle 610 at the first time instance in Figure 6A to the position and orientation of the mobile mining vehicle 610 at the second time instance in Figure 6B.

In the examples of Figure 6A and 6B, the apparatus 200 determines the transition of the mobile mining vehicle between the first time instance and the second time instance based on the first set of measurement data 620 and the second set of measurement data 660.

The apparatus 200 further forms a combined set of measurement data by transforming the first set of measurement data 620 to a coordinate frame 680 of the second set of measurement data 660 based on the transition of the mobile mining vehicle. The combined set of measurement data comprises the set first set of measurement data 620 and the second set of measurement data 620.

Transforming the first set of measurement data 620 to the coordinate frame 680 of the second set of coordinate data may comprise, for example, aligning the first coordinate frame 670 with the second coordinate frame 680, thereby transforming a data point in the first coordinate frame to a data point in the second coordinate frame. The apparatus 200 may be configured to align the first coordinate frame 670 to the second coordinate frame 680 using at least one transformation matrix or transformation function.

As illustrated in Figure 6B, the first set of measurement data 620 (dashed lines) and the second set of measurement data 660 together form a denser set of measurement data, thereby providing more accurate information on the environment of the mobile mining vehicle 610.

It was assumed that in the examples of Figure 6A and 6B, a single first data frame and a single second data frame are combined thereby the data buffer parameter being two. However, it should be noted the data buffer parameter could be higher, for example, 5, 10, 15 or higher. Further, it should be noted that the data buffer parameter may comprise at least one criterion for including a data frame into the combined set of measurement data and/or excluding a data frame from the combined set of measurement data.

Without limiting the scope of the claims, an advantage of forming a combined set of measurement data is that more data points may be included in information on the environment, thereby providing more accurate information on the environment. Another advantage is that denser data may be provided also at a long distance, thereby enabling more accurate detection of objects further away from the mobile mining vehicle.

Without in any way limiting the scope, interpretation, or application of the claims appearing below, a technical effect of one or more of the example embodiments disclosed herein is that more accurate data on the environment may be provided thereby enabling more accurate obstacle detection.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. A data processing apparatus for a mobile mining vehicle operating in a mining environment, the apparatus comprising at least one processor and at least one memory including computer program code, the at least one memory and the computer program code configured to with the at least one processor, cause the apparatus at least to:
receive a first set of measurement data relating to an environment of the mobile mining vehicle at a first time instance;
receive a second set of measurement data relating to the environment of the mobile mining vehicle at a second time instance;
determine a transition of the mobile mining vehicle between the first time instance and the second time instance;
form a combined set of measurement data by transforming the first set of measurement data to a coordinate frame of the second set of measurement data based on the transition of the mobile mining vehicle; and
provide the combined set of measurement data to an obstacle detection system of the mobile mining vehicle.

2. The apparatus according to claim 1, wherein the first set of measurement data comprises a plurality of data frames and the second set of measurement data comprises a single data frame, or wherein the first set of measurement data comprises a single data frame and the second set of measurement data comprises a plurality of data frames.

3. The apparatus according to any preceding claim, wherein the transition of the mobile mining vehicle comprises at least one of the following: a translation of the mobile mining vehicle or rotation of the mobile mining vehicle.

4. The apparatus according to any preceding claim, wherein the first set of measurement data comprises first point cloud data and the second set of measurement data comprises second point cloud data.

5. The apparatus according to any preceding claim, wherein the at least one memory and the computer program code are configured to with the at least one processor, cause the apparatus to determine the transition of the mobile mining vehicle based on the first set of measurement data and the second set of measurement data.

6. The apparatus according to any preceding claim, wherein the at least one memory and the computer program code are configured to with the at least one processor, cause the apparatus to determine the transition of the mobile mining vehicle based on data from one or more sensors associated with the mobile mining vehicle.

7. The apparatus according to any preceding claim, wherein the at least one memory and the computer program code are further configured to with the at least one processor, cause the apparatus to form the combined set of measurement data based on a data buffer parameter corresponding to a number of data frames to be included in the combined set of measurement data.

8. The apparatus according to claim 7, wherein the data buffer parameter the data buffer parameter further defines at least one criterion to be fulfilled by a data frame to be included to the combined set of measurement data.

9. The apparatus according to any preceding claim, wherein the at least one memory and the computer program code are further configured to with the at least one processor, cause the apparatus to determine at least one transformation matrix for transforming the first set of measurement data to a coordinate frame of the second set of measurement data based on the transition of the mobile mining vehicle.

10. The apparatus according to any preceding claim, wherein forming the combined set of measurement data comprises appending history data to new data.

11. The apparatus according to any preceding claim, wherein the first set of measurement data and the second set of measurement data comprise lidar data.

12. The apparatus according to any preceding claim, wherein the transition of the mobile mining vehicle comprises a transition of the mobile mining vehicle in relation to a reference coordinate system.

13. A mobile mining vehicle comprising an apparatus according to any preceding claim.

14. A method comprising:
receiving a first set of measurement data relating to an environment of the mobile mining vehicle at a first time instance;
receiving a second set of measurement data relating to the environment of the mobile mining vehicle at a second time instance;
determining a transition of the mobile mining vehicle between the first time instance and the second time instance;
forming a combined set of measurement data by transforming the first set of measurement data to a coordinate frame of the second set of measurement data based on the transition of the mobile mining vehicle; and
providing the combined set of measurement data to an obstacle detection system of the mobile mining vehicle.

15. A computer program comprising instructions for causing an apparatus to perform at least the following:
receiving a first set of measurement data relating to an environment of the mobile mining vehicle at a first time instance;
receiving a second set of measurement data relating to the environment of the mobile mining vehicle at a second time instance;
determining a transition of the mobile mining vehicle between the first time instance and the second time instance;
forming a combined set of measurement data by transforming the first set of measurement data to a coordinate frame of the second set of measurement data based on the transition of the mobile mining vehicle; and
providing the combined set of measurement data to an obstacle detection system of the mobile mining vehicle.
